# EUROPEAN PATENT APPLICATION

(11) **EP 3 597 320 A1**
(43) Date of publication of application: **22.01.2020**
(21) Application number: 19182212.1
(22) Date of filing: 25.06.2019
(51) Int. Cl.: B09B 3/00, B09B 5/00, B23P 19/02, B23P 19/027, B23P 19/04, B25B 27/02, B65F 1/14

(54) **DISMANTLING SYSTEM**

(30) Priority: 29.06.2018 NL 1042924
(71) Applicant: Innotech Kramer VOF, 1781 KA Den Helder (NL)
(72) Inventor: Kramer, Bertus, 1781KA Den Helder (NL)

(57) **Abstract**

Device for dismantling wheels of waste containers, comprising a hydraulic press, a hydraulic power supply unit and positioning and/or guiding means. The device is for instance embodied with a hydraulic cylinder (1), a knife (3) which is adapted to slide between the relevant plastic parts, a pin (5) to press the axle out of the plastic wheel, a housing or frame construction (7) to absorb the forces of the press and to guide the knife, a hinged axle collection and/or positioning system (8) for when a wheel is still on the axle, a wheel guidance and/or positioning system (9) adapted to be adjusted to or adapted to the size of the container, and a preferably detachable base frame (10).

## Description

### FIELD OF THE INVENTION

Device for dismantling wheels of waste containers and for separating the different types of material.

### SUMMARY OF THE INVENTION

The invention relates to a health- and safety-friendly, environmental-technical and economical procedure to enable the disassembly of the wheels of (old, written-off) waste containers, and that in an action of just a few seconds, and thereby, in one and the same operation, to dismantle the wheels and, moreover, to separate all the types of material from each other, in particular metal, plastic and rubber.

### DETAILED DESCRIPTION

The system comprises two components:
1. a light mobile hydraulic unit for feeding the press;
2a. a hydraulic press;
2b. and different guidance systems to guarantee suspension in different situations in the correct position:
   - wheels still attached to the container
   - an axle with a wheel
   - wheel block adjustable with foot movement for wheel position support.

Together they form a system that:
1 because of its mobility, also performs all necessary actions on the street;
1a in a health- and safety-friendly, sustainable, economical way compared to the current method;
1c this system also removes the rusted plastic parts from the wheels on the axle;

Improvements / benefits:
1. Health- and safety-friendly, more sustainable, more economical way of collecting containers.
1a to achieve more economical and sustainable way of collecting old container, dismantling, separating materials and new containers realized in one trip,
   and to take more in reference to now stackable due to the absence of wheels.
   - now two car journeys and later extra transport of axles and wheels for dismantling and separated materials transport back to provider.
1b - Health- and safety-conditions improve considerably:
   - no more muscle strength needed to squeeze out axle.
   - No other health- and safety-unfriendly actions are required to remove residual plastic on the axle.
1c much faster because the press squeezes out the axle in about 2 seconds and cuts the rubber loose. After the stroke back you can immediately separate the materials.

Application:
if waste containers are broken, they must be collected and exchanged for new ones.

The wheels are made in such a way that disengaging is no longer possible.

If the wheel is not removed, the bins cannot be stacked. As a result, they take up an unnecessary amount of space and more journeys will be needed per day.
not promoting.

For offering as a raw material, the materials must be separated.

What is happening externally in the current situation, what is not economical and the sustainability for this earth is burdened.

New situation with this invention; you take the new waste containers with you in your car and the mobile press.

You put the old container in the press on the street or in the car itself.

This one presses the axle off the wheel in a few seconds and cuts the rubber off the wheel.

Now you have immediately separated the metal, the plastic and the rubber.

On site in the car this is now collected separately in the 3 bins for metal, plastic and rubber.

The invention will now be further discussed with reference to the figure description below.

### BRIEF DESCRIPTION OF THE DRAWINGS

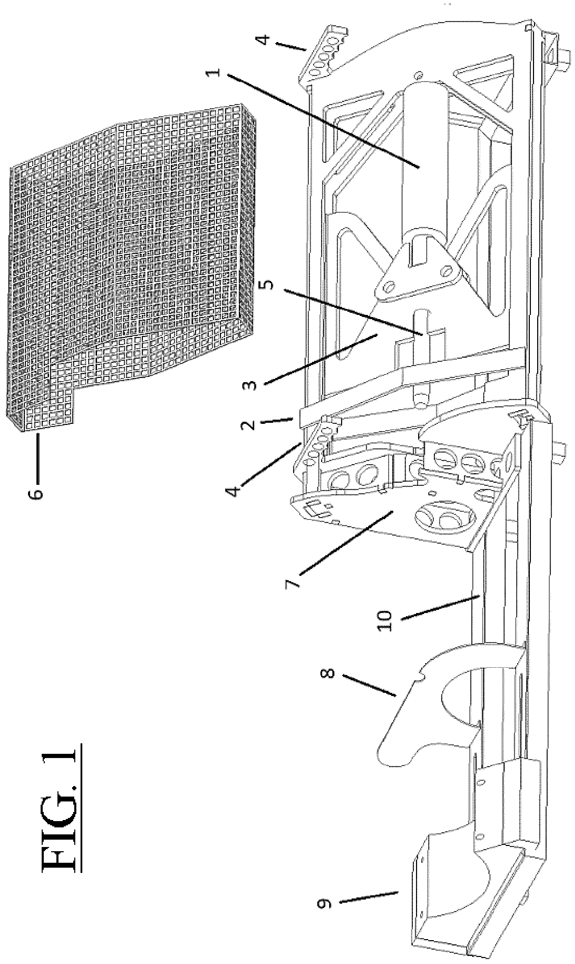

Figure 1 shows an exemplary embodiment of a device according to the invention.

### LIST OF REFERENCE NUMERALS

**Legend figure 1:**

| | |
|---|---|
| 1 | a hydraulic cylinder. |
| 2 | recoil protection. |
| 3 | a knife that slides into the frame and between plastic. |
| 4 | handles to transport the press with 2 people. |
| 5 | a pin for pressing the axle out of the plastic wheel. |
| 6 | protection against the moving parts. |
| 7 | the housing construction of the press to absorb the forces and guide the knife. |
| 8 | a hinged axle collection/positioning system for when a wheel is still on the axle. |
| 9 | a wheel guidance/positioning system. This can be taped to the size of the container with a small tap. |
| 10 | a solid base of e.g. a steel profile that connects everything together, preferably detachable, at the base of the housing 7 to limit the length and weight. |

## Claims

1. Device for disassembling wheels of waste containers, comprising
a hydraulic press,
a light mobile hydraulic unit for feeding the press,
positioning and/or guiding means that are arranged to ensure the suspension in the correct position in different situations.

2. Device for dismantling wheels of waste containers, comprising a hydraulic cylinder (1), a knife (3) which is adapted to slide between the relevant plastic parts, a pin (5) to press the axle from the plastic wheel, a housing or frame construction (7) to absorb the forces of the press and to guide the knife, a hinged axle-receiving and/or positioning system (8) for when a wheel is still on the axle, a wheel guidance and/or positioning system (9) adapted to be adjusted to or adapted to the size of the container.

3. Device as claimed in claim 2, comprising a sturdy base frame (10) of, for example, steel profile, which connects everything to each other, preferably detachable at the base of the housing or frame construction (7) to limit the length and the weight.
